# EUROPÄISCHE PATENTSCHRIFT

(11) **EP 0 955 326 B1**
(45) Veröffentlichungstag und Bekanntmachung des Hinweises auf die Patenterteilung: **24.07.2002**
(21) Anmeldenummer: 99107912.0
(22) Anmeldetag: 21.04.1999
(51) Int. Cl.: C08G 69/44, C08G 69/02, C08G 69/08, C08G 69/14

(54) **Weichmacherfreies Polyamid und Formmasse und dessen Verwendung**
Plasticizer free polyamide,moulded products therefrom and their use
Polyamide sans plastifiant, masses moules et leur utilisation

(30) Priorität: 08.05.1998 DE 19820661
(43) Veröffentlichungstag der Anmeldung: 10.11.1999
(73) Patentinhaber: EMS-Chemie AG, 7013 Domat/Ems (CH)
(72) Erfinder: Hoff, Heinz, Dr.rer.nat., 7015 Tamins (CH); Wolf, Ulrich, 7013 Domat / Ems (CH)
(74) Vertreter: Pfenning, Meinig & Partner

(56) Entgegenhaltungen:
- EP-A- 0 355 718
- EP-A- 0 837 088
- US-A- 4 328 331

## Beschreibung

Die Erfindung betrifft Polyamide, die mit Dimerdiol und dimerdiolhaltigen hydroxylterminierten Polyester modifiziert sind. Im Vergleich zu den unmodifizierten Polyamiden weisen die erfindungsgemäß modifizierten Polyamide eine erhöhte Flexibilität und Zähigkeit auch bei tiefen Temperaturen auf. Eine Änderung der mechanischen Eigenschaften aufgrund von Weichmacherverlust bzw. -migration bei Kontakt zu Medien oder bei Wärmeeinwirkung tritt wegen der inherenten Weichmachung nicht ein. Die flexiblen Polyamide weisen im Vergleich zu anderen diolhaltigen Polyamiden eine ausgezeichnete Hydrolysebeständigkeit auf. Die Erfindung betrifft weiterhin eine entsprechende Formmasse und deren Verwendung.

Für die Flexibilisierung von Polyamiden sind zahlreiche Ansatzpunkte in der Literatur beschrieben, wie der Einbau zusätzlicher polyamidbildender Monomere in Polyamid-Homopolymere, welche die Flexibilität und das Tieftemperaturverhalten verbessern.

Eine weitere Möglichkeit bietet das Einarbeiten von polyamidverträglichen Weichmachern in Polyamidformmassen. Hierbei kommen insbesondere Sulfonamide und Hydroxybenzoate zum Einsatz, die wie die Polyamide selbst fähig sind, Wasserstoffbrückenbindungen auszubilden und die Glasübergangstemperatur der Polyamide herabsetzen. Flexible Polyamide werden auch durch Compoundierung mit mindestens einer weiteren hochflexiblen Blendkomponente, teilweise in Verbindung mit niedermolekularen Weichmachern erhalten. In EP 0 233 428 wird Polyamid mit einem Polyetheramidblockpolymer und einem thermoplastischen Elastomer aus der Gruppe MBS, ABS, EPDM, NBR zu einer flexiblen Formulierung verarbeitet. Die DE 3 545 033 beschreibt die Flexibilisierung von Polyamid durch den Einsatz einer Kombination aus thermoplastischen Polyurethan-Elastomeren und Maleinsäure-gepfropften Polyolefinen zur Flexibilisierung von Polyamid.

Ebenso flexibel wirkt die N-Alkylierung von Polyamiden. Die daraus resultierende Abnahme der Wasserstoffbrückenbindungen beeinflußt die Eigenschaften von Polyamid stark. Der Polymerschmelzpunkt sinkt, die Löslichkeit wird erhöht und auf eine Vielzahl von Lösungsmitteln ausgedehnt und das Polymer nimmt, je nach Grad der Substitution, kautschukartige Eigenschaften an.

Durch Einbau von flexiblen Polyester-, Polyetheroder Polyolefin-Segmenten in Polyamid-Blockpolymeren resultieren ebenfalls flexible Polymere. In der US-Schrift US-5,574,128 werden sowohl Polyetherdiole als auch Polyetherdiamine als Weichsegmente in Kombination mit Polyamidblöcken beschrieben.

Analog zu den Polyetheresteramiden beschreibt die WO-8 502 852 flexible Polyesteramide mit Polycaprolacton-Segmenten in der Hauptkette. Statistische Polyesteramide mit einer niedermolekularen Diol-Komponente werden in EP 0 069 475 beschrieben.

Es existiert demnach eine Vielzahl von Möglichkeiten Homopolyamide oder Copolyamide zu flexibilisieren und ihnen eine gute Schlagzähigkeit auch bei tiefen Temperaturen zu verleihen. Sehr effektiv können geeignete, niedermolekulare Weichmacher flexibilisieren, ohne jedoch gleichzeitig eine sehr gute Schlagzähigkeit bei tiefen Temperaturen zu gewährleisten, so daß häufig eine Compoundierung mit Schlagzähmodifiern notwendig wird. Des weiteren weisen weichgemachte Polyamide den Nachteil auf, daß der Weichmacher in angrenzende Medien oder an die Oberfläche von Werkstücken migriert und somit der polymere Werkstoff mehr und mehr versprödet. Die Migration des Weichmachers in angrenzende Medien oder an die Oberfläche von Werkstücken migriert und somit der polymere Werkstoff mehr und mehr versprödet.

Polymermischungen bedürfen in der Regel einer höhreren Konzentration an flexibilisierender Komponente, damit ähnliche Moduli wie bei weichgemachten Polyamiden erreicht werden. Damit gehen aber häufig die polyamidtypischen Eigenschaften verloren.

Es war daher die Aufgabe der zugrundeliegenden Erfindung, einen nichtmigrierenden Flexibilisator für Polyamide zu finden, der eine hohe Effektivität aufweist und gleichzeitig dem zugrundeliegenden Polyamid ein günstiges Tieftemperaturverhalten sowie eine gute Hydrolysebeständigkeit verleiht.

Die Aufgabe wird in Bezug auf das Polyamid durch die Merkmale des Anspruches 1 und in Bezug auf die Formmasse durch die Merkmale des Anspruches 12 und in Bezug auf die Verwendung durch die Ansprüche 13 und 14 gelöst. Die Unteransprüche zeigen vorteilhafte Ausgestaltungen auf.

Überraschender Weise wurde gefunden, daß Dimerdiol und dimerdiolhaltige Polyesterdiole bereits in relativ kleinen Konzentrationen eine bedeutende Flexiblisierung bei Polyamiden bewirken und die modifizierten Polyamide eine gute Schlagzähigkeit auch bei tiefen Temperaturen aufweisen. Die Effektivität ist nahezu vergleichbar mit der niedermolekularerer Weichmacher, die erreichbare Schlagzähigkeit ist sogar deutlich besser als bei weichgemachten Polyamiden.

Die Erfindung betrifft somit flexible, weichmacherfreie Polyamide, aufgebaut aus üblichen polyamidbildenden Monomeren sowie 10- 50 Gew.-% Dimerdiol und/oder dimerdiolhaltigen Polyesterdiolen.

Als polyamidbildende Monomere können prinzipiell alle üblichen Lactame, Aminocarbonsäuren, Dicarbonsäuren und Diamine eingesetzt werden. Die Polyamid-Komponente basiert jedoch bevorzugt auf PA 6, PA 6 6, PA 6 9, PA 6 10, PA 6 12, PA 6 36, PA 11, PA 12, PA 12 12 sowie Copolyamide und Multipolyamide basierend auf den Dicarbonsäuren C₂ - C₃₆ und Diaminen C₂ - C₁₂ sowie Lactam-6, Lactam-12, Isophthalsäure, Terephthalsäure und Naphtalindicarbonsäure. Die PA-Komponente kann ebenso erhalten werden durch Polykondensation der entsprechenden Salze von Diamin und Dicarbonsäure.

Die eingesetzten Dimerfettdiole besitzen ein MG zwischen 400 - 1000 und sind durch Reduktion beider Carboxylgruppen der hydrierten Fettsäuren zu primären Alkoholgruppen zugänglich. Dimerdiol kann beispielsweise durch Hydrierung von dimeren Fettsäuren und/oder deren Estern nach GB 1043507 hergestellt werden. Eine andere Möglichkeit zur Herstellung von Dimerdiolen besteht in der Dimersisierung von ungestättigten Alkoholen in Gegenwart von Kieselerde/Tonerde-Katalysatoren und basischen Alkalimetallverbindungen gemäß der internationalen Anmeldung WO-91/13918. Die zugrundeliegenden hydrierten Dimerfettsäuren sind durch Dimerisierung von Octadiensäuren, gegebenenfalls unter Zusatz von Octensäuren, und anschliessender Hydrierung oder durch Dimerisierung von Eruca-Säure und anschliessender Hydrierung zugänglich. Die Dimerdiole, die nach den oben genannten technischen Verfahren hergestellt worden sind, weisen stets wechselnde Mengen an Trimertriolen und monofunktionellen Alkoholen auf. Als bevorzugte Diolkomponente kommmt ein Dimerdiol (C₃₆ und/oder C₄₄) in Frage, das einen Dimerdiolgehalt von mindestens 90%, einen Monodiolgehalt ≤ 1% und einen Triolgehalt ≤ 5% aufweist und dessen Hydroxylzahl im Bereich zwischen 195 - 205 mg KOH/g liegt. Bevorzugt eingesetzt werden Dimerdiole, die einen Dimerdiolgehalt größer 97 % sowie einem Trimertriolgehalt und Gehalt an monofunktionellen Alkoholen jeweils kleiner als 0,5% aufweisen.

Die OH-terminierten Polyesterdiole werden durch Kondensation der bereits oben beschriebenen Dimerdiole mit aliphatischen und/oder aromatischen Dicarbonsäuren C₄ - C₄₄ hergestellt, wobei bevorzugt die hydrierte Dimerfettsäure C₃₆ eingesetzt wird. Die erfindungsgemäß eingesetzten Polyesterdiole weisen eine Hydroxylzahl im Bereich zwischen 28 und 90 mg KOH/g, bevorzugt zwischen 60 - 80 mg KOH/g auf. Die erfindungsgemäßen "flexiblen Polyamide" können wohl einstufig als auch zweistufig hergestellt werden. Im ersten Fall, werden die polyamidbildenden Monomere mit den Diolkomponenten zusammen in einen Reaktor eingefüllt und zunächst unter Normaldruck und später unter vermindertem Druck zu den hochmolekularen Polyesteramiden kondensiert. Bei der zweistufigen Synthese wird zunächst ein Polyamidsegment aus den polyamidbildenden Monomeren unter üblichen Bedingungen aufgebaut und anschließend unter Veresterungsbedingungen mit den Diolkomponenten kombiniert. Als Katalysator kommen die bekannten Veresterungs- und Kondensationskatalysatoren auf Basis der Elemente Ge, Sn, Sb, Ti, Zr in Frage. Die Konzentration der Diolkomponente liegt dabei bevorzugt im Bereich von 10 - 30 Gew.-% besonders bevorzugt im Bereich von 10 -20 Gew.-% der Gesamtformulierung.

Die Erfindung betrifft auch Formmassen zur Herstellung von Fasern, Folien und Formteilen, die aus dem erfindungsgemäßen Polyamid bestehen. In die erfindungsgemäße "Polyamidformmasse" können auch die üblichen Verstärkungs- bzw. Füllstoffe wie mineralische Füllstoff, UV-Stabilisatoren, Antioxidantien, Pigmente, Farbstoffe, Nuklierungsmittel, Kristallisationsbeschleuniger bzw. - verzögerer, Fließhilfsmittel, Gleitmittel, Entformungsmittel, Flammschutzmittel sowie Mittel, die die elektrische Leitfähigkeit verbessern, sowie modifizierte bzw. nichtmodifizierte Kautschuke eingearbeitet werden. Durch kettenverknüpfende Agenzien, die mit Amin-, Hydroxy- oder Corboxylendgruppen reagieren können, wie beispielsweise Carbodiimide, Bisoxazoline und Diisocyanate, kann zusätzlich ein bedeutender Kettenaufbau realisiert und damit eine hohe Schmelzviskosität eingestellt werden.

Die Erfindung betrifft weiterhin die Verwendung der flexiblen, weichmacherfreien Polyamide zur Herstellung von Fasern, Folien und Formkörper, wie z.B. Monorohre sowie als Schmelzkleber für textile und technische Anwendungen. Mit der erfindungsgemäßen Formmasse können auch thermoplastische Mehrschichtverbunde, bestehend aus mindestens einer Schicht aus einer Formmasse auf Basis der flexiblen, weichmacherfreien Polyamide und weiteren Schichten auf Basis von Polyester oder Polyamid oder einer weiteren Polymerklasse hergestellt werden.

Die Formteile und Mehrschichtverbunde finden bei Konstruktionsteilen vor allem im Bereich der Automobil-, Elektro-, Maschinenbauindustrie Verwendung. Die Erfindung betrifft daher auch Mono- oder Mehrschicht Polymerschlauch- oder Rohrleitungen, die gegebenenfalls auch in einem Teilbereich gewellt sein können.

Die Erfindung wird nachfolgend durch mehrere Beispiele näher erläutert.

### Beispiele 1 - 15:

Die Lactame bzw. Aminocarbonsäuren, Dicarbonsäuren und Diamine werden unter Normaldruck und Stickstoffatmosphäre bei Temperaturen bis 290 bzw. 250 °C in einem Versuchsreaktor kondensiert, bis die Ringöffnung abgeschlossen bzw. die Wasserabscheidung nachläßt. Danach werden Dimerdiol (beispielsweise Pripol 2033 von der Unichema Int.) und/oder Dimerdioldimerat(beispielsweise Priplast 3197 der Unichema Int.), welches eine zahlenmittlere Molmasse von etwa 2000 g/mol aufweist, zusammen mit dem Veresterungskatalysator über eine Schleuse in die gerührte Polyamidschmelze eingetragen. Unmittelbar nach vollendeter Zugabe wird Vakuum angelegt, so daß innerhalb von 90 Minuten ein Enddruck ≤ 10 mbar erreicht wird. Bei einer Öltemperatur von 250 °C wird die Reaktionsmischung bis zu einem vorgegebenen Drehmoment auskondensiert und das Produkt mittels Spinnpumpe ausgetragen und granuliert.

Vor der Weiterverarbeitung wurde das Granulat auf einen Wassergehalt unter 0,05 % getrocknet. Mit einer Arburg Allrounder 320-210-750 wurden DIN-Zugstäbe und Kleindinbalken gespritzt. Die Blasfolien wurden auf einer Collin-Laboranlage, die 8x1 Monorohre auf einer Nokia-Maillefer 3-Schicht Rohrextrusionsanlage hergestellt.

Die stoffliche Zusammensetzung ist in Tabelle 1a + 1b wiedergegeben.
**Tabelle 1a:** Edukte und Einwaagen für Beispiele 1 - 12; Angaben in kg;
ADA = Aminolaurinsäure, LL = Laurinlactam, CL = Caprolactam, DDS = Dodecandicarbonsäure, TPS = Terephthalsäure

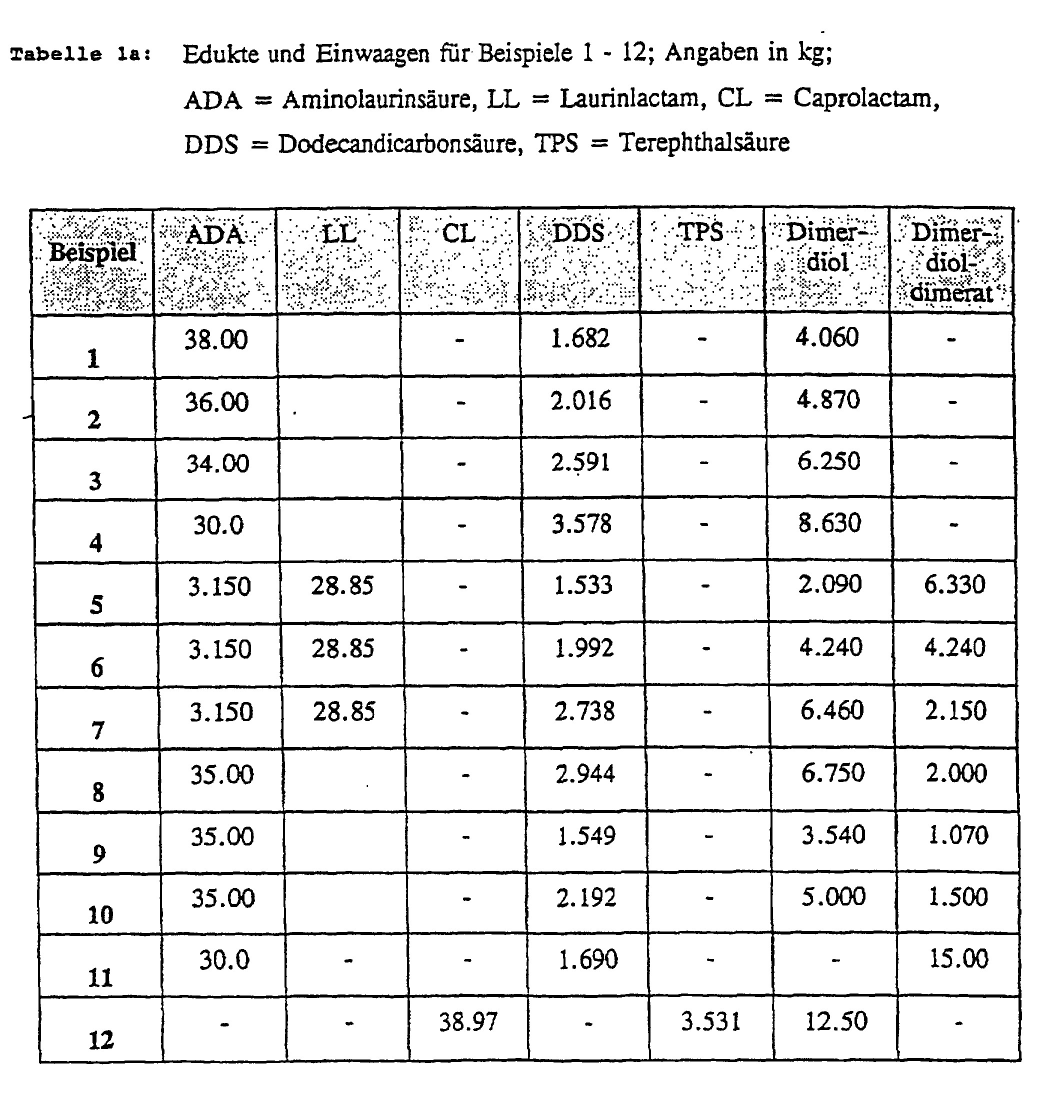

**Tabelle 1b:** Edukte und Einwaagen für Beispiele 13 - 15; Angaben in kg;
ADS = Aminolaurinsäure, SES = Sebazinsäure, HMDA = Diaminohexan, DDS = Dodecandicarbonsäure, TPS = Terephthalsäure

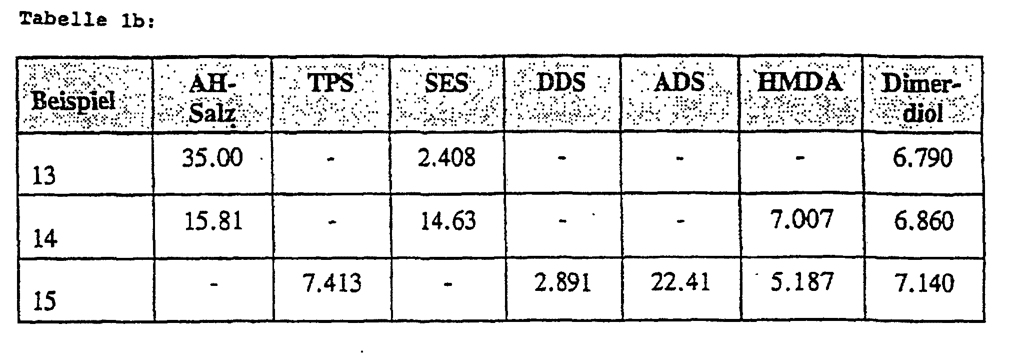

Die Eigenschaften der Produkte sind in Tab. 2 zusammengefaßt. Die flexiblen Polyamide weisen insgesamt sehr gute mechanische Eigenschaften auf. Das Kristallisationsverhalten ist nur wenig gegenüber dem zugrundeliegenden Homopolymer verändert, so daß auch die Weiterverarbeitung der Produkte problemlos durchgeführt werden kann. So lassen sich Blasfolien oder Monorohre mit guten eigenschaften herstellen. Die 8x1-Monorohre aus flexiblen Polyamid der Beispiele 2 - 12 überstehen den DIN-Schlagtest bei - 40 und -50 °C ohne Bruch, ohne daß ein zusätzlicher Schlagzähmodifizierer eingesetzt wurde.

Die Blasfolienextrusion erfolgte ohne jegliche weitere Compoundierung oder Anrollung der Rohgranulate. Dennoch ließen sich die flexiblen Polymere auf Anhieb problemlos zu Blasfolien verarbeiten. Die Folien weisen eine hohe Reißfestigkeit und -dehnung auf und sind bis Dicken von 80 µm transparent.

Die Schmelzpunkte liegen unterhalb der zugrundeliegenden Homo- oder Copolyamide und zwar in der Regel um so mehr, je höher der Anteil der flexibilisierten Diolkomponenten ist.

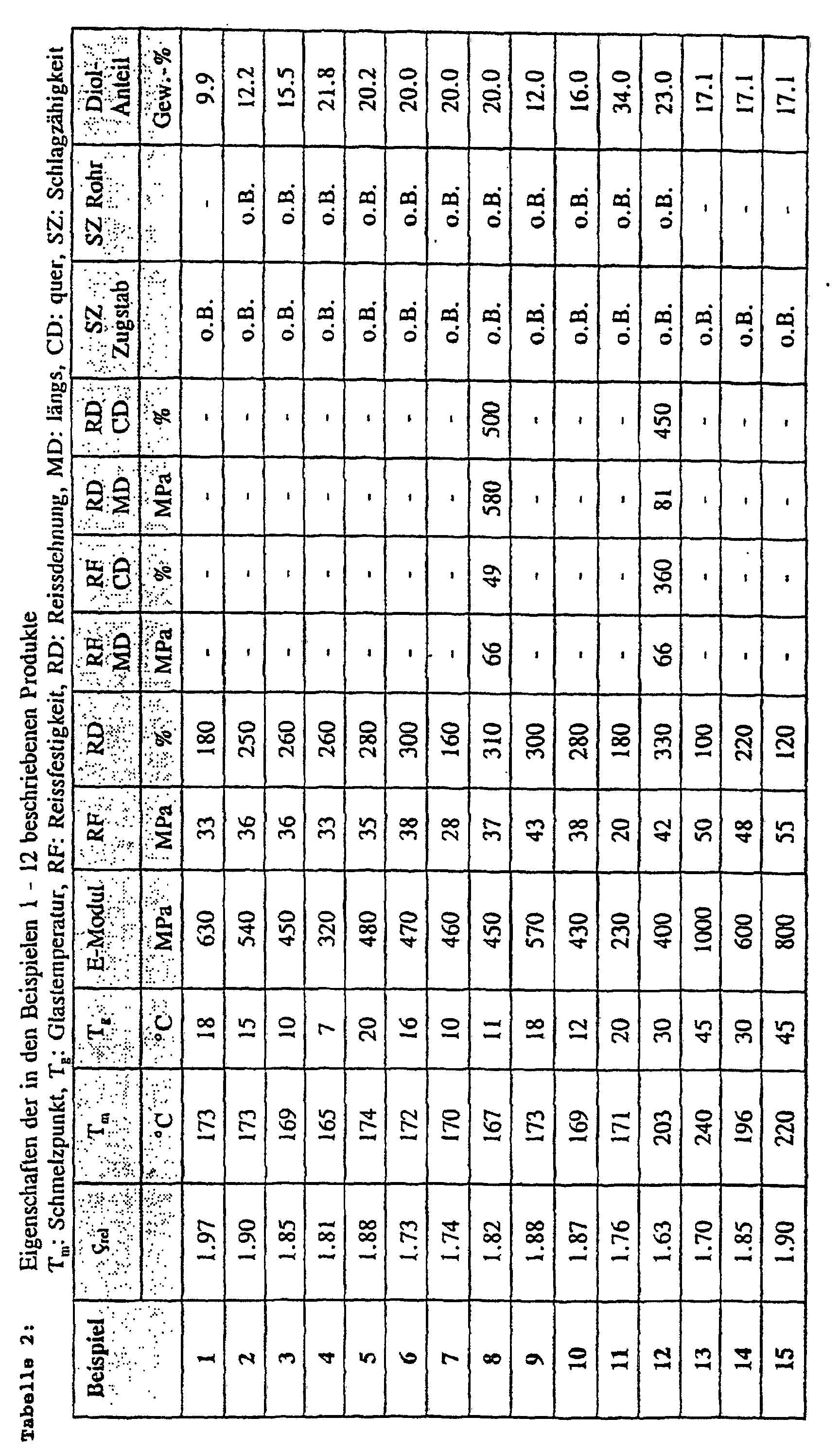

### Vergleichsbeispiele 1 - 11:

Laurinlactam und Dodecandicarbonsäure werden unter Normaldruck und Stickstoffatmosphäre bei Temperaturen bis 290 °C in einem Versuchsreaktor bis zum Einstellen des Gleichgewichtes zur Reaktion gebracht. Danach wird das geschmolzene Polycaprolactonidiol mit einer mittleren Molmasse von 1000, 2000 oder 3000 g/mol zusammen mit einem Veresterungskatalysator über eine Schleuse in die gerührte Polyamidschmelze eingetragen. Unmittelbar nach vollendeter Zugabe wird Vakuum angelegt, so daß innerhalb von 90 Minuten ein Enddruck ≤ 10 mbar erreicht wird. Bei einer Öltemperatur von 240 - 250 °C wird die Reaktionsmischung bis zu einem vorgegebenen Drehmoment auskondensiert und das Produkt mittels Spinnpumpe ausgetragen und granuliert. Die stoffliche Zusammensetzung und die Eigenschaften sind in Tabelle 3 angegeben.

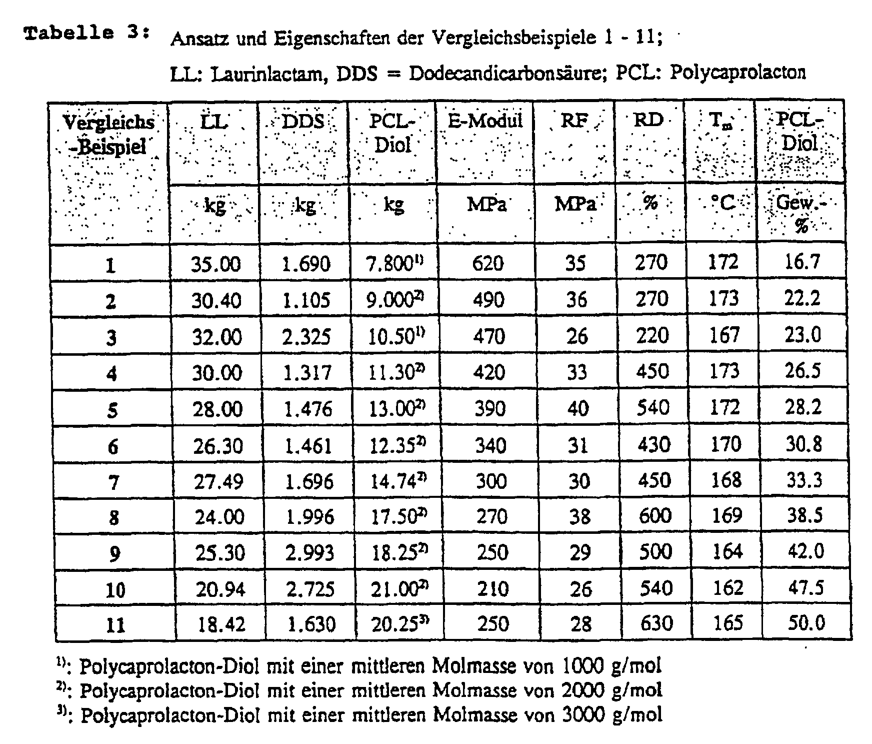

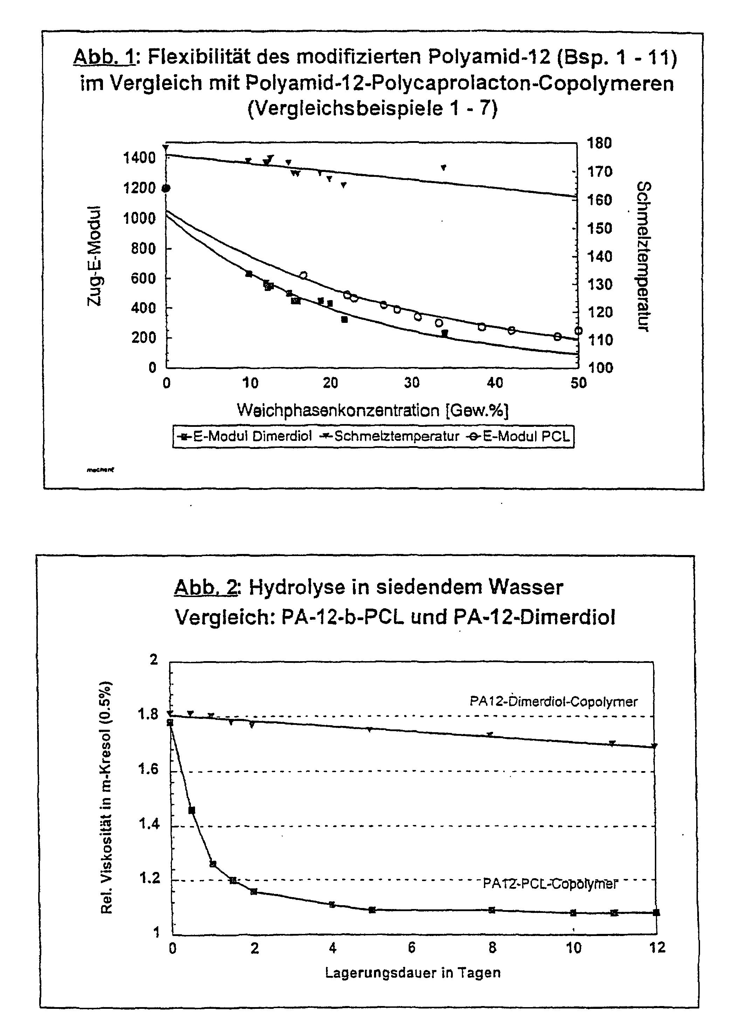

Wie der Vergleich der Moduli der einzelnen flexiblen Polyamide aus den Beispielen 1 - 12 und denjenigen der Blockcopolymere aus den Vergleichsbeispielen 1 - 11 zeigen (siehe Abb. 1) sind die erfindungsgemäß verwendeten Flexibilisierungskomponenten eindeutig effizienter als die aliphatischen Polyestersegmente in den Vergleichsbeispielen. Nahezu identisch zu den Polycaprolactonblöcken in ihrer flexibilisierenden Wirkung sind auch die Polyadipate der Diole C₂ - C₆. D.h. für die Einstellung einer bestimmten Flexibiliät eines vorgegebenen Polyamids bedarf es deutlich kleinerer Konzentrationen an Dimerdiolkomponenten im Vergleich zu den längerkettigen, aliphatischen Polyestersegmenten.

Ein weiterer Vorteil ist die im Falle der erfindungsgemäßen flexiblen Polyamide deutliche bessere Hydrolysebeständigkeit, wie dies aus Abb. 2 hervorgeht. Bei der Lagerung der Produkte aus Beispiel 4 und Vergleichsbeispiel 2, welche in etwa die gleiche Konzentration an Weichsegmenten aufweisen, in siedendem Wasser wird das Blockcopolymer aus Vergleichsbeispiel 2 innerhalb eines Tages so weit hydrolytisch abgebaut, daß die mechanischen Eigenschaften bereits ungenügend sind und ist nach 5 Tagen bereits vollständig abgebaut, während das erfindungsgemäße, flexible Polyamid auch nach 12 Tagen nur geringfügig hydrolytisch angegriffen ist und noch sehr gute mechanische Eigenschaften aufweist.

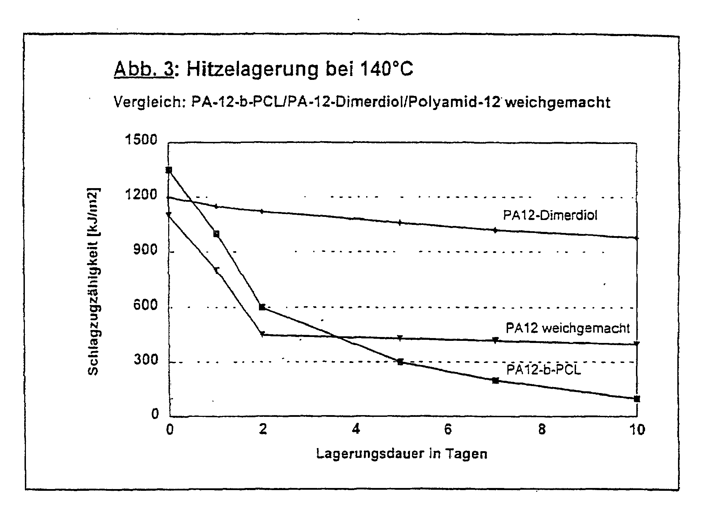

Gegenüber weichgemachten Polyamid ändert sich das mechanische Verhalten der erfindungsgemäßen flexiblen Polyamide bei Kontakt mit Weichmacher-eluierenden Medien oder bei Lagerung unter erhöhten Temperaturen nicht. Ein thermischer Abbau wie bei Polycaprolacton-Copolymeren tritt ebenfalls nicht auf. Abbildung 3 zeigt den Verlauf der Schlagzugzähigkeit als Funktion der Lagerungszeit bei 140 °C. Da der verwendete Weichmacher BBSA bei dieser Temperatur innerhalb der ersten beiden Tage ausschwitzt, fällt die Schlagzugzähigkeit auf ein deutlich tieferes Niveau ab. Das Polycaprolactonblockpolymer erleidet bei dieser Temperatur Kettenbrüche und versprödet inerhalb des Testzeitraumes. Die in der Hitzelagerung miteinander verglichenen Materialien waren mit einer Kombination von Phosphit und sterisch gehindertem Phenol stabilisiert.

## Patentansprüche

1. Weichmacherfreies Polyamid hergestellt durch Polykondensation und/oder Polymerisation von polyamidbildenden Monomeren,
**dadurch gekennzeichnet,**
**daß** es erhalten worden ist unter Zugabe von 10-50 Gew.-% eines Dimerdiols mit einem Molekulargewicht im Bereich von 400-1000 und/oder entsprechenden dimerdiolhaltigen, OH-terminierten Polyestern.

2. Polyamid nach Anspruch 1, **dadurch gekennzeichnet, daß** das Dimerdiol ein C₃₆ und/oder C₄₄ Dimerdiol ist, wobei der Dimerdiolgehalt mindestens 90 % beträgt.

3. Polyamid nach Anspruch 1 oder 2, **dadurch gekennzeichnet, daß** die Hydroxyl-Zahl des Dimerdiols im Bereich von 195-205 mg KOH/g liegt.

4. Polyamid nach mindestens einem der Ansprüche 1 bis 3, **dadurch gekennzeichnet, daß** das OHterminierte Polyesterdiol hergestellt worden ist durch Kondensation mit aliphatischen und/oder aromatischen Dicarbonsäuren mit 4-44 C-Atomen.

5. Polyamid nach Anspruch 4, **dadurch gekennzeichnet, daß** die Polyesterdiole eine Hyroxyl-Zahl im Bereich von 28-90 mg KOH/g aufweisen.

6. Polyamid nach mindestens einem der Ansprüche 1 bis 5, **dadurch gekennzeichnet, daß** die Konzentration der Diolkomponente im Bereich zwischen 10-30 Gew.-% der Gesamtformulierung beträgt.

7. Polyamid nach mindestens einem der Ansprüche 1 bis 6, **dadurch gekennzeichnet, daß** die Konzentration der Diolkomponente im Bereich zwischen 12-20 Gew.-% der Gesamtformulierung beträgt.

8. Polyamid nach mindestens einem der Ansprüche 1 bis 7, **dadurch gekennzeichnet, daß** als polyamidbildende Monomere C₆-C₁₂ Lactame eingesetzt worden sind.

9. Polyamid nach mindestens einem der Ansprüche 1 bis 7, **dadurch gekennzeichnet, daß** als polyamidbildende Monomere C₆-C₁₂ Aminocarbonsäuren eingesetzt worden sind.

10. Polyamid nach mindestens einem der Ansprüche 1 bis 9, **dadurch gekennzeichnet, daß** als polyamidbildende Monomere lineare und zyklische, aliphatische wie aromatische Dicarbonsäuren, lineare und zyklische aliphatische wie aromatische Diamine sowie entsprechende Salze aus Diamine und Dicarbonsäuren eingesetzt worden sind.

11. Polyamid nach mindestens einem der Ansprüche 1 bis 10, **dadurch gekennzeichnet, daß** als polyamidbildende Monomere C₄-C₄₄ Dicarbonsäuren, TPS, IPS und/oder Naphthalindicarbonsäure sowie C₂-C₁₂ Diamine eingesetzt worden sind.

12. Polyamidformmasse zur Herstellung von Fasern, Folien, Formteilen oder dergleichen, **dadurch gekennzeichnet, daß** sie durch ein Polyamid nach mindestens einem der Ansprüche 1 bis 10 gebildet ist.

13. Verwendung des Polyamids nach mindestens einem der Ansprüche 1 bis 12, als Polyamidformmasse zur Herstellung von Fasern, Folien und Formkörpern.

14. Verwendung der Polyamide nach mindestens einem der Ansprüche 1 bis 13, zur Herstellung von Schmelzklebern.

## Claims

1. A softener-free polyamide produced by polycondensation and/or polymerization of polyamide-forming monomers, **characterized in that** it is obtained with the addition of from 10 to 50% by weight of a dimeric diol with a molecular weight in the range of from 400 to 1000 and/or corresponding OH-terminated polyesters containing a dimeric diol.

2. A polyamide according to Claim 1, **characterized in that** the dimeric diol is a C₃₆ or C₄₄ dimeric diol, the dimeric diol content amounting to at least 90%.

3. A polyamide according to Claim 1 or 2, **characterized in that** the hydroxyl value of the dimeric diol is in the region of from 195 to 205 mg KOH/g.

4. A polyamide according to at least one of Claims 1 to 3, **characterized in that** the OH-terminated polyester diol is produced by condensation with aliphatic and/or aromatic dicarboxylic acids with from 4 to 44 carbon atoms.

5. A polyamide according to Claim 4. **characterized in that** the polyester diols have an hydroxyl value in the region of from 28 to 90 mg KOH/g.

6. A polyamide according to at least one of Claims 1 to 5, **characterized in that** the concentration of the diol component is in the range of between 10 and 30% by weight of the total formulation.

7. A polyamide according to at least one of Claims 1 to 6, **characterized in that** the concentration of the diol component is in the range of between 12 and 20% by weight of the total formulation.

8. A polyamide according to at least one of Claims 1 to 7, **characterized in that** C₆ to C₁₂ lactams have been used as polyamide-forming monomers.

9. A polyamide according to at least one of Claims 1 to 7, **characterized in that** C₆ to C₁₂ aminocarboxylic acids have been used as polyamide-forming monomers.

10. A polyamide according to at least one of Claims 1 to 9, **characterized in that** linear and cyclic, aliphatic and aromatic dicarboxylic acids, linear and cyclic aliphatic and aromatic diamines and corresponding salts of diamines and dicarboxylic acids have been used as polyamide-forming monomers.

11. A polyamide according to at least one of Claims 1 to 10, **characterized in that** C₄ to C₄₄ dicarboxylic acids, TPS, IPS and/or naphthalenedicarboxylic acid and C₂ to C₁₂ diamines have been used as polyamide-forming monomers.

12. A polyamide moulding compound for producing fibres, foils, moulded parts or the like, **characterized in that** it is formed by a polyamide according to at least one of Claims 1 to 10.

13. Use of the polyamide according to at least one of Claims 1 to 12 as a polyamide moulding compound for producing fibres, foils and moulded bodies.

14. Use of the polyamides according to at least one of Claims 1 to 13 for producing hot-melt adhesives.

## Revendications

1. Polyamide exempt d'agent plastifiant, préparé par polycondensation et/ou polymérisation de monomères générateurs de polyamide,
**caractérisé en ce qu'**il est obtenu par ajout de 10 à 50% en poids d'un dimère diol ayant une masse moléculaire dans la plage de 400 à 1000 et/ou de polyesters à terminaison OH correspondants contenant un dimère diol.

2. Polyamide selon la revendication 1, **caractérisé en ce que** le dimère diol est un dimère diol en C₃₆ et/ou C₄₄, la teneur en dimère diol étant d'au moins 90%.

3. Polyamide selon la revendication 1 ou la revendication 2, **caractérisé en ce que** l'indice d'hydroxyle du dimère diol se situe dans la plage de 195 à 205 mg de KOH/g.

4. Polyamide selon l'une au moins des revendications 1 à 3, **caractérisé en ce que** le polyesterdiol à terminaison OH est préparé par condensation avec des acides dicarboxyliques aliphatiques et/ou aromatiques ayant de 4 à 44 atomes de carbone.

5. Polyamide selon la revendication 4, **caractérisé en ce que** les polyesterdiols présentent un indice d'hydroxyle dans la plage de 28 à 90 mg de KOH/g.

6. Polyamide selon l'une au moins des revendications 1 à 5, **caractérisé en ce que** la concentration du composant diol se situe dans la plage de 10 à 30% en poids de la formulation totale.

7. Polyamide selon l'une au moins des revendications 1 à 6, **caractérisé en ce que** la concentration du composant diol se situe dans la plage de 12 à 20% en poids de la formulation totale.

8. Polyamide selon l'une au moins des revendications 1 à 7, **caractérisé en ce que** des lactames en C₆ à C₁₂ sont utilisés à titre de monomères générateurs de polyamide.

9. Polyamide selon l'une au moins des revendications 1 à 7, **caractérisé en ce que** des acides aminocarboxyliques en C₆ à C₁₂ sont utilisés à titre de monomères générateurs de polyamide.

10. Polyamide selon l'une au moins des revendications 1 à 9, **caractérisé en ce que** des acides dicarboxyliques linéaires et cycliques, aliphatiques ou aromatiques, des diamines linéaires ou cycliques, aliphatiques ou aromatiques, ainsi que des sels correspondants de diamines et d'acides dicarboxyliques sont utilisés à titre de monomères générateurs de polyamide.

11. Polyamide selon l'une au moins des revendications 1 à 10, **caractérisé en ce que** des acides dicarboxyliques en C₄ à C₄₄, de l'acide téréphtalique, de l'acide isophtalique et/ou de l'acide naphthalènedicarboxylique, ainsi que des diamines en C₂ à C₁₂, sont utilisés à titre de monomères générateurs de polyamide.

12. Matière moulable à base de polyamide pour la fabrication de fibres, de films, de pièces moulées ou similaires, **caractérisé en ce qu'**elle est formée par un polyamide selon l'une au moins des revendications 1 à 10.

13. Utilisation d'un polyamide selon l'une au moins des revendications 1 à 12 à titre de matière moulable en polyamide pour la fabrication de fibres, de films et d'éléments moulés.

14. Utilisation d'un polyamide selon l'une au moins des revendications 1 à 13 pour la fabrication d'adhésifs fusibles.
